Europäisches Patentamt

European Patent Office

Office européen des brevets

(11) Veröffentlichungsnummer: **0 209 778**
**B1**

(12) **EUROPÄISCHE PATENTSCHRIFT**

(45) Veröffentlichungstag der Patentschrift:
12.04.89

(51) Int. Cl.⁴: **E 06 B  3/30,** F 16 B  43/00

(21) Anmeldenummer: **86109219.5**

(22) Anmeldetag: **05.07.86**

(54) **Befestigungsvorrichtung für mit einer Metallverkleidung versehene Fenster- bzw. Türrahmen.**

(30) Priorität: **24.07.85  DE 3526467**

(43) Veröffentlichungstag der Anmeldung:
**28.01.87 Patentblatt 87/5**

(45) Bekanntmachung des Hinweises auf die Patenterteilung:
**12.04.89 Patentblatt 89/15**

(84) Benannte Vertragsstaaten:
**AT BE CH FR GB IT LI NL SE**

(56) Entgegenhaltungen:
**DE-A- 2 748 487
DE-B- 1 198 522
DE-U- 8 503 949
GB-A- 947 551
US-A- 2 862 742
US-A- 3 678 979**

(73) Patentinhaber: **Firma auratherm Vertriebsgesellschaft für Fenster- und Fassadensysteme mbH, Weselerstrasse 561, D-4400 Münster (DE)**

(72) Erfinder: **Bisping, Franz, Weseler Strasse 565, D-4400 Münster (DE)**

(74) Vertreter: **Habbel, Hans-Georg, Dipl.-Ing., Postfach 3429 Am Kanonengraben 11, D-4400 Münster (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Befestigungsvorrichtung für mit einer Metallverkleidung versehene Fenster- oder Türrahmen aus Holz oder Kunststoff mit Befestigungsschrauben gemäß dem Oberbegriff des Hauptanspruches.

Es sind heute aus Holz bestehende Fenster- und Türrahmen bekannt, die nach außen hin mit einer Aluminiumverkleidung ausgerüstet sind. Hierbei wird die Aluminiumverkleidung am Rahmen des Fensters — wobei der Begriff «Rahmen» sowohl den Fensterrahmen wie auch den Fensterflügel umfaßt — über eine Schraube festgelegt, die vom Inneren des Rahmens in die Rückseite des mit einer entsprechenden Befestigungsöffnung versehenen Metallprofils geführt wird.

Bei den zwangsläufig auftretenden Temperaturunterschieden und den materialmäßig bestehenden unterschiedlichen Dehnungskoeffizienten bei Holz, Kunststoff und Metall, treten zwischen den beiden Bauteilen nämlich dem Rahmen und der Verkleidung, Spannungen auf, die von der Befestigungsvorrichtung, d.h. also der Schraube, aufgenommen werden müssen. Diese Spannungen können in Abhängigkeit der Farbe des Metallprofils außerordentlich groß sein und werden durch die Himmelsrichtung des jeweiligen Fensters noch stark beeinflußt, da die Wärmeeinstrahlung an der Südseite natürlich stärker als an der Nordseite ist. Bei Fenstern, die zumindest teilweise halb im Schatten und halb in der Sonne liegen, können diese Wärmespannungen innerhalb des Rahmens des einen Fensters über die Gesamtfläche des Fensters gesehen außerordentlich groß und unterschiedlich sein.

Hierbei treten Bewegungen des Metallprofils auf, die größer als die Bewegungen des Rahmens sind und die Befestigungsschraube muß diesen Bewegungen folgen können, ohne daß eine Zerstörung der Schraubverbindung erfolgt.

Die durch die unterschiedlichen Wärmedehnungen auftretenden Spannungen wirken sich dabei nicht nur auf den Schaft der Schraube aus, sondern wirken sich auch auf die Stützfläche aus, mit der sich die Schraube am Rahmenprofil abstützt und auf den Bereich des Schraubenschaftes, mit dem dieser an der ihn umgebenden Bohrung im Holz- oder Kunststoffrahmen anliegt. Hier kann es zu Zerstörungen des Rahmens kommen, d.h. hier können Rahmenteile absplittern.

Eine gattungsbildende Schraube ist aus dem DE-U-85 03 949 bekannt. Diese Schraube besteht teilweise aus Metall, teilweise aus Kunststoff, so daß damit Wärmebrücken ausgeschaltet werden. Bei den zwangsläufig auftretenden Temperaturunterschieden und den materialmäßig bestehenden unterschiedlichen Dehnungskoeffizienten bei Holz, Kunststoff und Metall, treten zwischen den beiden zu verbindenden Bauteilen Spannungen auf, die von der eigentlichen Befestigungsschraube aufgenommen werden müssen. Um damit den Bewegungen zwischen den beiden miteinander zu verbindenden Bauteilen Rechnung tragen zu können bzw. folgen zu können, weist die gattungsbildende Schraube einen Schraubenkopf auf, der an seiner Unterseite eine Kugelfläche besitzt und sich damit in einer entsprechenden Pfanne in dem Rahmen abstützt, so daß Bewegungen der Schraube nicht zur Zerstörung des Stützbereiches der Schraube an dem Rahmenbauteil führen. In Abhängigkeit des eingesetzten Materials für den Rahmen kann es aber im Stützbereich des Schraubenkopfes immer noch zu Überbeanspruchungen kommen, so daß ggf. hier Rahmenteile absplittern können.

Der Erfindung liegt die Aufgabe zugrunde, diesen auftretenden Bewegungen der Schraube Rechnung zu tragen und Zerstörungen des Rahmens durch die Bewegung und den Druck der Schraube unabhängig vom Rahmenmaterial auszuschalten.

Diese der Erfindung zugrundeliegende Aufgabe wird durch die Lehre des Hauptanspruches gelöst.

Vorteilhafte Ausgestaltungen sind in den Unteransprüchen erläutert.

Mit anderen Worten ausgedrückt: Bei der erfindungsgemäßen Befestigungsvorrichtung wird die durch die Schräglage der Befestigungsschraube entstehende Verkürzung der Strecke vom Kopfansatz bis zum Eingriff in die Metallverkleidung durch eine Unterlegscheibe aufgenommen, die beispielsweise eine Höhe von 4 mm bei einem Durchmesser der im Rahmen vorgesehenen Bohrung von 6 mm aufweist. Vorzugsweise weist die Unterlegscheibe eine Shore-Härte von 85 auf, und diese Unterlegscheibe gleicht die Verkürzung der Strecke vom Kopfansatz bis zum Eingriff in die Metallverkleidung aus.

Vorzugsweise weist bei einem Bohrungsdurchmesser von 6 mm der Schraubenschaft einen Durchmesser von weniger als 3 mm, vorzugsweise 2,7 mm, auf, so daß der Schraubenschaft in der Bohrung im Rahmen wandern kann, ohne den Rahmen zu beeinflussen. Außerdem ist bei sehr großen Schräglagen der Schrauben durch den geringen Durchmesser des Schraubenschaftes sichergestellt, daß dieser in das Material des Rahmens eintreten kann, ohne hierbei größere Zerstörungen auszuüben.

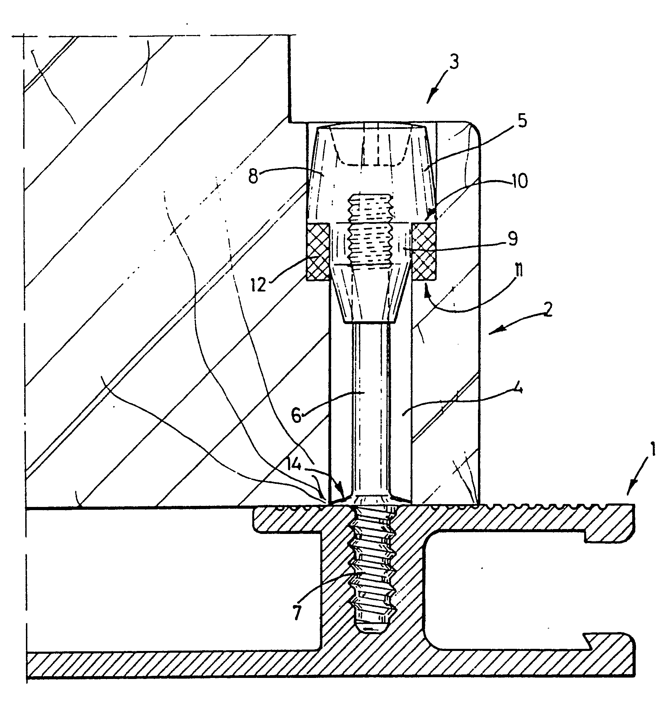

Ein Ausführungsbeispiel der Erfindung wird nachfolgend anhand der Zeichnung beschrieben.

In der Zeichnung ist mit 1 eine Metallverkleidung, mit 2 ein Teil eines Rahmens und mit 3 eine Befestigungsschraube bezeichnet, durch die die Metallverkleidung 1 im Rahmen 2 festgelegt wird.

In dem aus Holz oder Kunststoff bestehenden Rahmen 2 ist eine Rahmenbohrung 4 vorgesehen, die der Aufnahme der Befestigungsschraube 3 dient.

Die Befestigungsschraube 3 weist einen aus Kunststoff bestehenden Schraubenkopf 5 auf, an den sich ein Schraubenschaft 6 aus Metall anschließt, der in einem Gewinde 7 endet. Der Schraubenschaft 6 ist dabei — wie aus der Zeichnung ersichtlich — im Schraubenkopf 5 verankert.

Der Schraubenkopf 5 besteht im wesentlichen aus zwei Teilen, nämlich einem Ringkörper 8, der als eine sich zum freien Ende verjüngende Kugelschicht ausgebildet ist, wobei sich an den Ringkörper 8 ein zylindrisches Schaftteil 9 anschließt, dessen Durchmesser dem Durchmesser der Rahmenbohrung 4 entspricht. Zwischen dem zylindrischen Schaftteil 9 und der Unterseite des Ringkörpers 8 ist eine Schulterringfläche 10 ausgeformt, die sich zur Achse der Befestigungsschraube rechtwinklig erstreckt.

Die Rahmenbohrung 4 weist zwei verschiedene Durchmesser auf: Einmal einen Durchmesser, der dem maximalen Durchmesser des Ringkörpers 8 angepaßt ist und zum andern einen Durchmesser, der dem Schaftteil 9 entspricht. Dadurch wird in der Rahmenbohrung 4 eine Stützfläche 11 geschaffen. Zwischen der Schulterringfläche 10 des Schraubenkopfes 5 und der Stützfläche 11 im Rahmen 2 ist eine Unterlegscheibe 12 angeordnet, die aus einem APTK-Kunststoff (Äthylen-Propylen-Per-Kautschuk) besteht und vorzugsweise eine Shore-Härte von etwa 85 aufweist. Unter Zwischenschaltung dieser Unterlegscheibe 12 stützt sich also der Schraubenkopf 5 an dem Rahmen 2 ab.

Die Größenverhältnisse zwischen dem Durchmesser des Schraubenschaftes 6 und dem Durchmesser der Rahmenbohrung 4 sind so gewählt, daß nach Möglichkeit der Schraubenschaft maximal halb so groß ist wie die Rahmenbohrung 4.

Vor dem Übergang des Schraubenschaftes 6 in das Gewinde 7 ist ein Stützring 14 vorgesehen, dessen Außendurchmesser der Rahmenbohrung 4 entspricht.

Der Stützring 14 ist zu seinem freien Randbereich hin sich kegelig verjüngend ausgebildet und dient der Führung der Befestigungsschraube 3 und der Abstützung an der Metallverkleidung 1, behindert aber nicht die Bewegung des Schraubenschaftes 6, da er sich leicht in den umgebenen Rahmenbereich der Rahmenbohrung 4 einpressen kann.

Aus der Zeichnung ist ersichtlich, daß durch diese Anordnung die Befestigungsschraube 3 Bewegungen als Folge der Längendehnungen des Metallprofils folgen kann, ohne daß Druckbeanspruchungen auf den Rahmen 2 ausgeübt werden, die zu einem Zerstören des Rahmens und damit auch natürlich zu einem Lockern der Schraubverbindung führen können.

**Patentansprüche**

1. Befestigungsvorrichtung für mit einer Metallverkleidung (1) versehene Fenster- oder Tührrahmen (2) aus Holz oder Kunststoff mit Befestigungsschrauben (3), die vom Inneren des Rahmens durch im Vergleich zum Schraubenschaft einen größeren Durchmesser aufweisende Rahmenbohrungen (4) in die Metallverkleidung (1) geführt sind und an ihrem einen Ende ein Metallgewinde (7) aufweisen, während das andere Ende durch einen aus Kunststoff gefertigten Schraubenkopf (5) gebildet ist, der zum freien Ende mit einer Mantelfläche versehen ist, die der einer sich zum freien Ende verjüngenden Kugelschicht entspricht, wobei die Rahmenbohrung (4) eine Stützfläche (11) zur Abstützung des versenkt im Rahmen angeordneten Schraubenkopfes (5) aufweist, dadurch gekennzeichnet, daß die Stützfläche (11) in der Rahmenbohrung (4) sich rechtwinklig zur Schraubenachse erstreckt, zwischen dem Schraubenkopf (5) und der Stützfläche (11) der Rahmenbohrung (4) eine Unterlegscheibe (12) aus elastisch verformbarem Kunststoff angeordnet ist und sich an den Schraubenkopf (5) in Richtung zum Gewinde (7) materialeinheitlich ein mit gleichem Durchmesser wie die Rahmenbohrung (4) versehener zylindrischer Schaftteil (9) anschließt, der in eine sich zum übrigen Schraubenschaft (6) verjüngende Manschette übergeht.

2. Vorrichtung nach Anspruch 1, dadurch gekennzeichnet, daß die Unterlegscheibe (12) eine Shore-Härte von 85 aufweist.

3. Vorrichtung nach Anspruch 1 oder 2, dadurch gekennzeichnet, daß der Schraubenkopf (5) mit einer zur Schraubenachse rechtwinkligen Schulterringfläche (10) versehen ist.

4. Vorrichtung nach Anspruch 1, dadurch gekennzeichnet, daß am gewindeseitigen Ende des Schraubenschaftes (6) ein der Rahmenbohrung (4) entsprechender, tellerartiger, einteilig aus dem Schraubenschaft (6) ausgeformter Stützring (14) vorgesehen ist.

**Claims**

1. Fixing device for window or door frames (2) made of wood or plastic and provided with metal cladding (1) with fixing screws (3) which pass from the inside of the frame through frame holes (4), of diameter greater than the screw shank, into the metal cladding (1) and have at their ends metal threads (7) while the other ends are formed by a screw heads (5), made from plastic, the free ends of which have surfaces which correspond to spherical zones tapering towards the free ends, in which the frame hole (4) has a supporting surface (11) for supporting the screw head (5) which is sunk into the frame, characterized in that the supporting surface (11) in the frame hole (4) extends at right angles to the screw axis, a washer (12) made of elastically-deformable plastic is positioned between the screw head (5) and the supporting surface (11) of the frame hole (4), and a cylindrical shank section (9), which has the same diameter as the frame hole (4) and which changes into a collar tapering towards the rest of the screw shank (6), adjoins and is materially-integral with the screw head (5) in the direction of the thread (7).

2. Device according to Claim 1, characterized in that the washer (12) has a Shore hardness of 85.

3. Device according to Claims 1 or 2, characterized in that the screw head (5) has an annular shoulder (10) at right angles to the screw axis.

4. Device according to Claim 1, characterized in that a plate-like support ring (14) formed integrally with the screw shank (6) and corresponding to the frame hole (4) is provided at the end of the screw shank (6) next to the thread.

**Revendications**

1. Dispositif de fixation pour un châssis de fenêtre ou de porte (2) en bois ou en matière plastique muni d'un habillage métallique (1), comprenant des vis de fixation (3) qui sont passées, de l'intérieur du châssis, dans l'habillage métallique (1), à travers des perçages (4) du châssis présentant un grand diamètre comparativement à la tige de la vis, et qui présentent un filetage métallique à une de leurs extrémités, tandis que l'autre extrémité est formée par une tête de vis (5) fabriquée en matière plastique, qui est munie vers l'extrémité libre, d'une surface latérale qui correspond à une couche sphérique qui se rétrécit vers l'extrémité libre, le perçage (4) du châssis présentant une surface d'appui (11) destinée à donner appui à la tête (5) de la vis qui est encastrée dans le châssis, caractérisé en ce que la surface d'appui (11) ménagée dans le perçage (4) du châssis s'étend perpendiculairement à l'axe de la vis, qu'une rondelle (12) en matière plastique élastiquement déformable est interposée entre la tête (5) de la vis et la surface d'appui (11) du perçage (4) du châssis et qu'à la tête (5) de la vis fait suite, dans le sens allant vers le filetage (7), une partie tige cylindrique (9) qui possède le même diamètre que le perçage (4) du châssis, et qui se termine par une manchette qui se rétrécit vers le reste de la tige (6) de la vis.

2. Dispositif selon la revendication 1, caractérisé en ce que la rondelle (12) possède une dureté Shore de 85.

3. Dispositif selon la revendication 1 ou 2, caractérisé en ce que la tête (5) de la vis est munie d'une surface d'épaulement annulaire (10) perpendiculaire à l'axe de la vis.

4. Dispositif selon la revendication 1, caractérisé en ce qu'à l'extrémité côté filetage de la tige (6) de la vis, est prévue une bague d'appui (14) en forme d'assiette, formée en une seule pièce dans la matière de la tige (6) de la vis, et qui correspond au perçage (4) du châssis.